# EUROPEAN PATENT APPLICATION

(11) **EP 4 368 571 A1**
(43) Date of publication of application: **15.05.2024**
(21) Application number: 22206666.4
(22) Date of filing: 10.11.2022
(51) Int. Cl.: C01B 33/027, C01B 33/03, H01G 11/24, H01M 4/134

(54) **SOLUTION-LIQUID-SOLID (SLS) BASED SYNTHESIS OF SI AND/OR GE NANOWIRE CARBON COMPOSITES**

(71) Applicant: University of Limerick, Limerick (IE)
(72) Inventor: Ryan, Kevin M., Limerick (IE); Collins, Gearoid, Limerick (IE)
(74) Representative: Purdylucey Intellectual Property

(57) **Abstract**

A method for synthesizing an Si and/ or Ge NW/carbon composite in a solution-based approach is provided. The method comprises combining (i) a mixture of a lithium alloying metal and a carbon particle, (ii) an Si and/or Ge precursor and (iii) a refluxing solvent under reflux conditions and reacting to form the composites.

## Description

### Field of the Invention

The current invention relates to solution-based synthesis of composites comprising silicon and/or germanium nanowires on carbon particles. The invention also relates to batteries comprising said composites.

### Background of the Invention

Several methods have been reported to fabricate composite anodes comprising silicon (Si) and carbon (C) components. These approaches are often multi-step processes and depend on the target composite design, e.g., core-shell, yolk-shell, embedded/anchored, dispersion in a porous matrix. The approaches also involve combinations of strategies.

The six most notable strategies for composite synthesis are top-down acid/plasma etching of bulk Si, magnesiothermic reduction of silica, ball milling, chemical vapour deposition (CVD), wet processing self-assembly and spray drying.

Simple mixing techniques like grinding, mechanical mixing, filtering, and hot pressing have also been used to develop low-cost composite mixtures. However, the repeated charge/discharge cycles and the differing volume expansions that Si and C undergo can lead to a loss of contacting at the interface, degrading the integrity of composite over time.

To date, there has been no disclosure of a solution-based technique to produce a composite comprising nano Si and graphite (Gt). Most prior art methods have employed CVD treatments at very high temperatures (> 800°C), using Si precursor gasses (silane-containing compounds) to synthesise Si/C materials of varying composite design. This type of approach does not achieve high loading of nanowires.

The current invention serves to alleviate one or more problems of the prior art by providing a method in which Si nanowire (NW) and/or germanium (Ge) NW growth on graphite is realised through a solution-liquid-solid (SLS) protocol, involving the decomposition of phenylsilane (PS), and Tin (Sn)-seeded NW growth in the presence of a refluxing solvent. This solution-based approach offers advantages and is a cheaper alternative to CVD with similar levels of crystallographic control.

### Summary of the Invention

The current invention relates to composites in which Si, Ge, or a combination of Si and Ge, nanowires (NW) are grown directly on a carbon particle e.g., graphite (Gt), (herein "composites of the invention"). These composites are denoted SiNW/Gt, GeNW/Gt or SiGeNW/Gt, when graphite is used as the carbon particle.

The current invention provides a method for synthesizing the composites of the invention (herein "method of the invention"). The composite produced by the method is also encompassed in the term "composite of the invention".

The method of the invention is a scalable, one-pot, single reaction, process. The method has precise control over the composite design and composition. Within a two-hour reaction, yields of > 30% from an Si and/or Ge source can be achieved with the current method.

Solution-based synthesis of these composites has not been reported previously.

Notably, the method of the current invention also avoids the need for preliminary catalyst deposition/formation processes typically employed in CVD growth of Si nanostructures. In the current method, NWs are grown on the carbon particle through a solution-based approach, exploiting the low eutectic point of Si/Ge with Sn, avoiding excessively high temperatures required for CVD growth and no requirement of a CVD reactor.

The approach of the current invention is also favourable for battery applications, as direct growth of NW on the carbon particle improves the contact at the Si/Ge-carbon interface over more rudimentary prior art procedures like ball milling, wet processing and spray drying.

Accordingly, an aspect of the current invention provides a method for synthesizing an Si and/or Ge NW/carbon composite, the method comprising the steps of:
combining a catalyst which is a lithium alloying metal, a carbon particle, an Si and/or Ge precursor and a refluxing solvent in a reaction under reflux conditions and reacting to form Si and/or Ge NW/carbon composites.

The catalyst and carbon particle may be a mixture formed prior combining in the reaction. This is referred herein in the Examples as a "precursor mixture".

Thus, accordingly, an aspect of the current invention provides a method for synthesizing an Si and/or Ge NW/carbon composite, the method comprising the steps of:
combining a mixture of a catalyst which is a lithium alloying metal and a carbon particle, an Si and/or Ge precursor and a refluxing solvent in a reaction under reflux conditions and reacting to form Si and/or Ge NW/carbon composites.

The reaction is under reflux conditions. In the reaction, the Si and/or Ge precursor decomposes at the reaction temperature, forming Si and Ge respectively and initiating Si and/or Ge-Sn eutectic formation at the surface of the carbon particle. Si and/or Ge monomers supersaturate the Sn seeds, nucleating NW growth.

In an embodiment, the catalyst is selected from the group comprising Sn, In, Bi and Au. Preferably, the catalyst is Sn.

In an embodiment, the catalyst is a powder.

In an embodiment, the Si precursor comprises silane. Preferably, the precursor is selected from phenylsilane, diphenylsilane, silane, tetraphenylsilane, halosilanes including chlorosilane, trimethylsilane, tetramethylsilane, hexachlorodisilane and silicon iodide. In an embodiment, the precursor is phenylsilane.

In an embodiment, the Ge precursor may be selected from the group comprising phenylgermane, diphenylgermane, triphenylgermane) GeX4, (X= H, Cl, Br, I).

The precursor may be a liquid or a gas.

In an embodiment, the carbon particle may be selected from the group comprising carbon nanofibers (CNF), carbon nanotube (CNT), carbon microparticles, graphene, or graphite. Preferably, the carbon is graphite.

In an embodiment, the particle is powder.

In an embodiment, the refluxing solvent is a high boiling point solvent that has been heated to a reaction temperature greater or equal to 380°C to produce a refluxing solvent.

Preferably, the reaction temperature is from 380°C to 470°C.

In a preferred embodiment, the high boiling point solvent is selected from squalane, octadecene and ethylene glycol. In an embodiment, the solvent is squalane.

In an embodiment, the mixture of catalyst and carbon is mixed prior to the addition to the combination in the reaction to provide a uniform mixture. In other words, it is a homogenous mixture. Typically, the catalyst and carbon are both powders.

In an embodiment, prior to the addition of the precursor and the refluxing solvent to the reaction, the mixture of catalyst and carbon particle is annealed in the presence of argon at a temperature of around 250°C to 350°C, preferably 300°C. This may be any suitable time, for example, for 30 minutes to two hours, preferably for around 1 hour.

In an embodiment, prior to reaching refluxing conditions, there is a step of combining the mixture of catalyst and carbon particle and the solvent to provide a combination and heating this combination to a temperature from about 80°C to about 125°C, preferably under vacuum. In this embodiment, the reaction is then raised to a reaction temperature to provide reflux conditions, preferably from 380°C to 470°C. The precursor is then added to the combination. Alternatively, the precursor can be added to the combination prior to providing a reaction temperature of from about 80°C to about 125°C.

Typically, the method of the invention is conducted in a single vessel or chamber. This may be a flask. It may be a suitable refluxing apparatus.

Typically, the reaction is held under vacuum.

Typically, the method of the invention comprises a step of providing a constant flow of inert argon to control the production of said nanowires.

Typically, the method of the invention is carried out at atmospheric pressure.

Typically, the method of the invention is carried out in an environment or system without no moisture or air.

In an embodiment, the reaction is one suitable for solution-based synthesis of nanowires.

The produced composite is in the form of a powder. Typically, the composite is isolated or recovered from any residual organic solution. This may be by any suitable means, such as centrifugation in toluene and acetone. Such means are known in the art.

In an embodiment, the recovered powder is dried.

An aspect of the invention provides a composite produced or obtained from the method of the current invention.

As aspect of the invention provides a Si or Ge and SiGe NW/carbon composite comprising a carbon particle having nanowires on the surface. The NW form a porous shell bound to the particle.

Preferably, the nanowires have a diameter of from 40nm to 350nm, typically 80 to 150nm.

A battery comprising the composite of the invention is also provided.

A method of preparing a battery comprising the composite of the invention is also provided. Preferably, the battery is a lithium ion battery.

A method of preparing a battery comprising the method of the invention is also provided.

### Definitions and General Preferences

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g., a feature, element, characteristic, property, method/process step or limitation) or group of integers (e.g., features, element, characteristics, properties, method/process steps or limitations) but not the exclusion of any other integer or group of integers. Thus, as used herein the term "comprising" is inclusive or open-ended and does not exclude additional, unrecited integers or method/process steps.

When used herein the term "silicon precursor" is a material or compound that participates in a reaction to produce silicon. Silicon precursors are generally high purity gas or liquid materials.

When used herein the term "volume based chemical synthesis" refers to a method involving suspending the metal catalyst in the liquid or supercritical phase of a suitable solvent and introducing a precursor.

When used herein the term "solution based synthesis" refers to the growth of nanowires in a solution media.

"Phenylsilane" (Ps), also known as silylbenzene, a colourless liquid, is one of the simplest organosilanes with the formula C₆H₅SiH₃.

The term "reaction" when used herein is the nucleation and growth of a nanowire from a substrate on a carbon particle made possible by the presence of a precursor and a catalyst. It may be any wet chemical system or environment suitable for this nucleation and growth of nanowires. It is solution based synthesis of nanowires. It may be a lab-based system.

The term "solution-liquid-solid (SLS)" when used herein is defined as the bottom-up growth of nanowires using a liquid catalyst in a solution media. Examples are provided in Andrew T Heitsch, et al., (Solution Liquid Solid (SLS) growth of silicon nanowires, J.Am. Chem. Soc. 2008, 130, 16, 5436-5437).

The term "refluxing" when used herein refers to a technique of heating a chemical reaction for an amount of time, while continuously cooling the vapour produced by heating back into liquid form. A "refluxing solvent" is one that is undergoing reflux. Generally, the solvent is heated to its boiling point. This technique facilitates heating without significant loss of the solvent. "Refluxing conditions" are the conditions or parameters that allow this process to take place.

The term "eutectic point" is the lowest temperature at which the liquid phase is stable at a given pressure.

The term "eutectic formation" is the melt of the alloy that occurs at a lower temperature than each of the separate components.

The term "lithium alloying metal" refers to metals that can be alloyed with lithium. Examples include but are not limited to tin (Sn), Indium (In), Bismuth (Bi) and Gold (Au). Preferably, the metal is Sn. The metal is one that is capable of eutectic formation with Si and/or Ge at temperatures below 500°C.

### Brief Description of the Figures

The invention will be more clearly understood from the following description of an embodiment thereof, given by way of example only, with reference to the following Figures in which;
**Figure** 1: High-temperature growth of SiNW/Gt nanocomposites. SiNW/Gt is grown in a 100 mL RBF in the solution phase of squalane using a three-zone furnace. The flask is connected to a Schlenk line for Ar gas flow and evacuation. A water condenser attached to the flask enables high-temperature reflux of the squalane vapour, and the vessel is sealed at the top with a septum cap.
**Figure 2****:** (A-D) SEM images of Si NW growth on graphite microparticles, taken at different magnifications with an accelerating voltage of 8 kV.
**Figure 3****:** XRD of the SiNW/Gt. Reference patterns for Gt (green circle; JCPDS card no. 41-1487), Si (red asterisk; JCPDS card no. 27-1402) and Sn (yellow triangle; JCPDS card no. 04-0673) are shown.
**Figure 4****:** TGA of five different SiNW/Gt composites and SiNW. (a) Background TGA curves of pure Gt (purple), Si NWs (orange) and Sn NPs (green), (b) TGA curves for 5 different composite powders (SiNW/Gt_1 to SiNW/Gt_5) and SiNW and (c) corresponding elemental compositions (C, Si and Sn) for each composite. Each sample was analysed under O₂ gas flow, between 30-950 °C at ramp rates of 40 °C min⁻¹ from 30-350 °C and 10 °C min⁻¹ from 350-950 °C.
**Figure 5****:** Weight percentages of Gt (purple), Si (orange) and Sn (green) for each SiNW/Gt formulation. Data collated from TGA carbon loss and quantitative EDX of the Si:Sn weight ratio.
**Figure 6****:** HC testing of SiNW/Gt composites and comparison to Gt (light blue) and SiNW (red), (a) 5^{th} cycle GCD profiles, (b) discharge capacities, (c) corresponding specific capacity and capacity retention trends as functions of Si content, (d) initial and average CEs as functions of Si content and (e) RCTs for each composite configuration.
**Figure 7****:** Post-mortem SEM analysis of the post-cycled morphology for (a-e) each SiNW/Gt composite formulation and (f) SiNW. Images were taken after 200 cycles at 100 mA g⁻¹ vs Li metal.
**Figure 8****:** DCPs (2^{nd} cycle) of (a) SiNW/Gt_1, (b) SiNW/Gt_2, (c) SiNW/Gt_3, (d) SiNW/Gt_4, (e) SiNW/Gt_5 and (f) SiNW. All cells were cycled at 100 mA g⁻¹ from 0.01-1.0 V vs Li/Li⁺. HC testing of pure Gt (purple), Sn NPs (green) and Si NWs (orange) allowed for analysis of redox peak locations.
**Figure 9****:** Electrochemical comparison of SiNW/Gt_1 and SiNW/Gt_mix. (a) GCD profiles, (b) DCPs, (c) RCTs, (d) discharge capacity profiles and (e) Nyquist plots of SiNW/Gt_1 (orange), SiNW/Gt_mix (green) and Gt (purple). Cells were cycled at 100 mA g⁻¹ between 0.01-1.0 V vs Li/Li⁺.

### Detailed Description of the invention

The current invention provides a method in which Si and/or Ge nanowire (NW) growth on graphite is realised through a solution-based approach. The method involves decomposition of a precursor and seeded NW growth on a carbon particle in the presence of a refluxing solvent. This method has not been previously disclosed.

The advantages of the method of the invention include, but are not limited to, the following:
- Si/GeNWs can be produced at much lower temperatures than CVD with no requirement of a CVD reactor. This also saves on cost and enables liquid Si or Ge precursors to be used to grow Si NWs.
- The method of the invention is a single step synthesis process. No pre-deposition of metal catalyst needed. Typically, bottom-up growth of SiNWs involves some pre-synthesis catalyst deposition technique, either by thermal evaporation, solvent evaporation, PECVD deposition, sputtering, or electrodeposition. Contrary to previously mentioned multi-step processes to grow Si/C composites, complete composite growth is achievable within a single reaction by using a composite precursor mixture of Sn powder and Gt. It may therefore be effective in reducing both the time and the cost of the overall reaction procedure.
- There is no requirement of high-temperature (> 800 °C) a-Si PECVD coating. Direct growth of Si and/or Ge NWs on carbon such as graphite avoids the requirement of high-temperature PECVD coatings; of amorphous Si layers to boost gravimetric capacity. Additionally, as the catalyst and carbon particle can be homogeneously mixed prior to growth, NW growth is not limited to one-sided growth on the carbon particle, rather it appears as a coating around each particle.
- The method of the current invention allows control over Si and/or Ge content of composite. The amount of catalyst powder material added to the reaction vessel can be tuned to control the Si/Ge NW content of the composite. Control over the precursor mixture of catalyst and carbon such as graphite can allow for a high degree of control over the resultant composite composition. By fixing the carbon content at 250 mg and varying the Gt-Sn ratio from 40:1 to 5:1, returned SiNW/Gt composites with contents ranging between 12-45 wt% Si were achieved.
- The synthesis procedure of the current invention is scalable. Composite yields > 30% are achievable through this outlined approach. Scaling up the reaction vessel will allow for higher achievable mass yields, with potential to produce composite material in the range of grams.

Notably, the catalyst is a lithium alloying metal and is selected from the group comprising Sn, In, Bi and Au. In a preferred embodiment, the catalyst is Sn. Unlike other frequently used CVD catalysts like Fe, Mn, Co, and Ni, Sn has the distinct advantage of being electrochemically active versus lithium (Li) metal, contributing to overall battery performance instead of adding to the inactive weight of the electrode. In addition, the eutectic point these catalysts with Si/Ge enables lower temperature NW growth. With this approach, the requirement of a pre-synthesis catalyst coating/deposition step used in most CVD procedures is removed.

In an embodiment, the catalyst is a particle with less than or equal to 150nm in diameter.

Other approaches to synthesise Si NWs often rely on the use of capping agents (dodecanethiol, dodecylamine) to prevent aggregation of the NPs in solution. Pre-synthesis annealing of the precursor mixture which can take place in one embodiment of the method of the invention, forms discrete seeds on carbon avoiding catalyst agglomeration *in situ.*

In a notable embodiment, the ratio of carbon particle to catalyst is 40:1 to 1:1. It may be 30:1, 20:1, 10:1, or 5:1. The ratio chosen depends on the desired outcome. The higher the catalyst in the precursor mixture, the higher the Si/Ge wt% in the final composite.

It will be appreciated that the amounts of the components of the combination of the method depends on the result that is to be achieved.

The reaction is under refluxing conditions. The reaction proceeds for a time suitable to grow the nanowires, for example, 2 hours, or 1.5 hours.

Typically, the reaction has a reaction temperature of about 470°C. The reaction temperature maybe one at or over 370°C, preferably from 370°C to 490°C. it may be at or above, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C or 485°C.

It will be appreciated that the mixture of catalyst, which is a lithium alloying metal, and the carbon particle, the solvent (which becomes a refluxing solvent under refluxing conditions) and the precursor can be added to the combination in any order.

In an embodiment, prior to the addition of the precursor and the solvent and prior to reacting at refluxing conditions, the mixture of lithium alloying metal and the carbon particle is annealed. This may be in the presence of argon at a temperature of from about 250°C to about 350°C, preferably 300°C. This may be for any suitable time, for example, for 30 minutes to two hours, preferably for around 1 hour. Preferably, annealing is under vacuum.

In an embodiment, prior to reacting at refluxing conditions, the mixture of the lithium alloying metal and the carbon particle is combined with the solvent and optionally the Si and/or Ge precursor, and this combination is heated to a temperature of around 80°C to around 125°C, typically around 125°C, preferably under vacuum. This step removes moisture. It may be for any suitable time sufficient to remove moisture.

In this embodiment, the temperature is then increased to a reaction temperature sufficient to provide refluxing conditions, preferably from about 380°C to about 470°C. In an embodiment wherein the precursor is not added to the combination prior to heating to around 125C, the Si and/or Ge precursor is added to the combination once refluxing conditions are achieved.

It will be appreciated that the method may comprise multiple rounds of injections or additions of components of the combination. If replenished, an amount of the Si and/or Ge precursor can be added. If the components are not replenished, the reaction is cooled after a suitable time.

The produced Si and/or Ge nanowire composites can then be removed from the reaction system. This can be by any standard and known technique.

The system can be kept under control using standard techniques of a constant flow or inert argon gas through the system, coupled with a water condenser attached to the system.

The entire method is conducted at atmospheric pressure.

In an embodiment, the method produces a yield of from 30% to 100% from an Si and/or Ge precursor, or from 50% to 75%. The Si and/or Ge yield may be 30% or more, 40% or more, 50% or more, 60% or more, 70% or more, 80% or more, or 90% or more, from an Si and/or Ge precursor.

The invention also provides an SiNW/carbon composite, a GeNW/carbon composite or an SiGe NW/carbon composite produced by the method of the invention.

The invention also provides a composite comprising a carbon particle having Si and/or Ge NW on the surface of the particle. Typically, the NW are dispersed over the surface of the particle. Notably, the NW form a porous shell that is bound to the particle surface. The NW are hair like growths from the particle surface.

Preferably, the nanowires are polydisperse and have a diameter of from 40nm to 350nm, typically 80 to 150nm.

In an embodiment, the composite comprises >10% wt Si and/or Ge. As stated, this can vary depending on mass ratio of the precursor mixture.

The composite may comprise from 12% to 45 wt %, Si and/or Ge, 15% to 30 wt%, Si and/or Ge, or 20 to 25 wt% Si and/or Ge. It may comprise catalyst, e.g., Sn, from 2% to 6 wt%, or 3% to 5%. The composite may comprise carbon, e.g., Gt, from 86% to 49 wt %. It will be appreciated that the amount of carbon present depends on the amounts of Si and/Ge present in the composite.

A battery comprising the composite of the invention is also provided. The composite of the current invention lends itself to battery applications as direct growth of the NW provides good electrical contact with the current collector and reduces the need for inactive material, such as conductive additives and/or binders compared to mixes of silicon particles and carbon particles.

A method of preparing a battery comprising the composite of the invention is also provided. Preferably, the battery is a lithium ion battery.

A method of preparing a battery comprising the method of the invention is also provided.

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

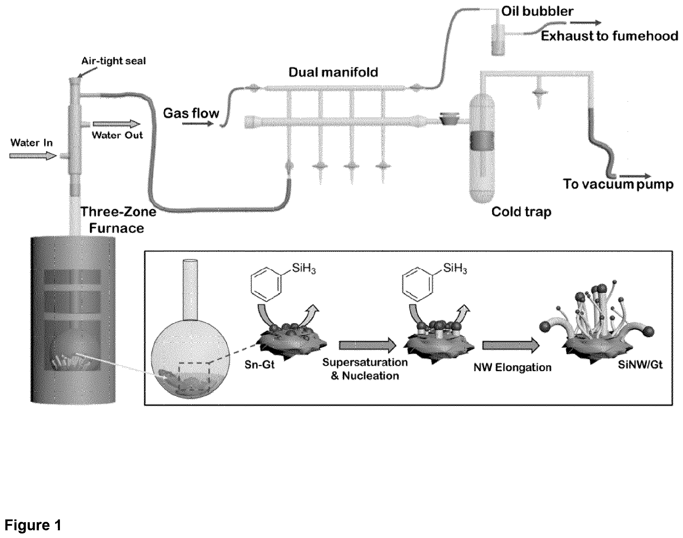

An exemplary method of the current invention is detailed schematically in Figure 1.

### EXAMPLES

### Preparation of SiNW/Gt and analysis of morphology.

### METHODOLOGY

Tin (Sn) nanopowder (<150 nm particle size, ≥99% trace metals basis), purchased from Sigma Aldrich (CAS No. 7440-31-5), was used as a scalable catalyst source, enabling high SiNW mass yields by growing directly on commercial Gt (TIMREX^{®} SLP30, TIMCAL).

Prior to synthesis, the precursor mixture of Sn and Gt (denoted Sn/Gt) is vortex mixed for 5 min to uniformly disperse the Sn powder in Gt, before being annealed under argon at 300 °C for 1 h to form Sn seeds on Gt. The SiNW/Gt composites were grown in the solution phase of a high boiling point solvent (HBS), namely squalane. Squalane acted as a medium for dispersion of the Si precursor, PS.

In a custom-made Pyrex 100 mL round bottom flask (RBF), a powder mixture of Gt and Sn was added, along with squalane (7 mL). A water condenser was fixed to the RBF, connected to a Schlenk line, and the reaction vessel was sealed at the top with a septum cap. The system was held under vacuum at 40 mTorr for 45 mins at 125 °C after which the flask was filled with Ar gas, and the temperature was ramped up to 460 °C. Water flow through the condenser established reflux conditions, cooling the boiling squalane mixture. PS (1.5 mL) was introduced to the system by injecting it through the top of the septum cap. PS decomposes at high temperatures, forming silane gas initiating Si-Sn eutectic formation at the Gt surface. Si monomers supersaturate the Sn seeds, nucleating NW growth. After 60 min, an additional 1.5 mL of PS was added. The reaction then proceeded for an additional 60 min, followed by slow cooling under Ar gas flow. The composite powder was isolated from the residual organic solution through successive centrifugations in toluene and acetone.

The SiNW/Gt powder was thrice washed in toluene and centrifuged at 6000 rpm for 10 min, followed by a fourth centrifugation step in acetone. The SiNW/Gt powder was dried in a vacuum oven for 12 h at 100 °C.

SiNW/Gt morphology was analysed under scanning electron microscopy (SEM) using the Hitachi SU-70 system, with accelerating voltage of 8 kV.

Five different SiNW/Gt formulations were synthesised (namely SiNW/Gt_1 to SiNW/Gt_5) using this method. The Si content was tuned by controlling the weight ratio of the Sn/Gt precursor mix. A fixed amount of a Gt powder (250 mg) was used, and the Sn content (6.25, 8.33, 12.5, 25, 50 mg) was varied (Table 1). A Gt-free SiNW control sample was similarly synthesised, using 50 mg of Sn.

Powder XRD patterns of SiNW/Gt were recorded on a PANalytical X'Pert PRO MRD with a Cu Kα (λ = 1.5418 Å) radiation source and an X'celerator detector. It will be appreciated that any XRD may be used.

### RESULTS

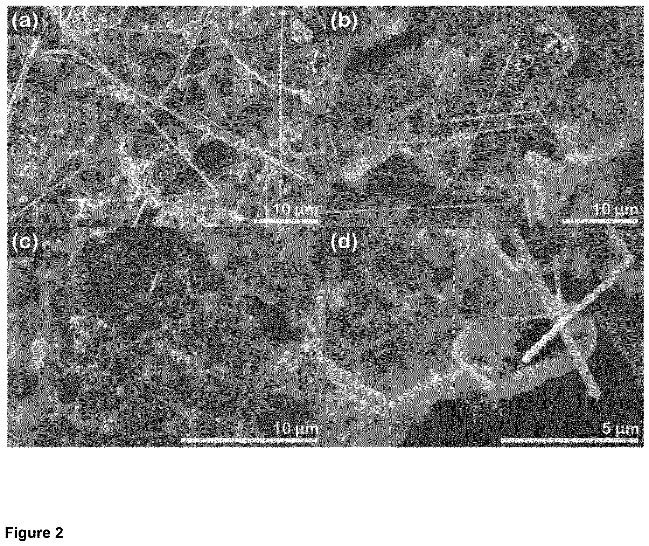

The synthesised composites appear as Gt microparticles covered by polydisperse Si NWs with diameters in the range of 40-350 nm. This is illustrated in Figure 2.

Five different SiNW/Gt formulations were synthesised (namely SiNW/Gt_1 to SiNW/Gt_5). The Si content was tuned by controlling the weight ratio of the Sn/Gt precursor mix as per the above method. Final weights of the recovered composite powders are detailed in Table 2.

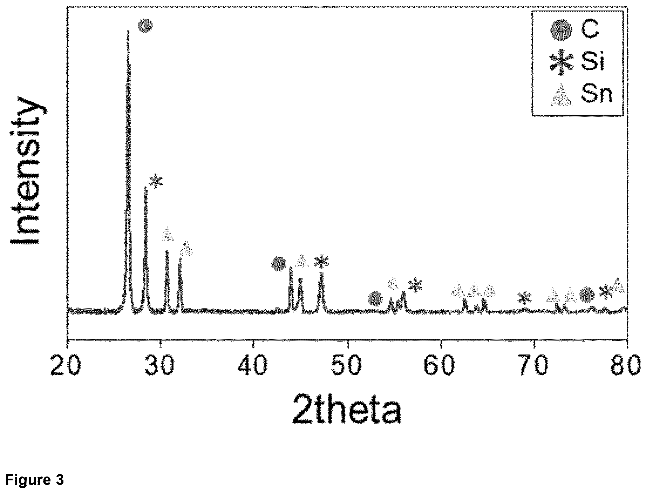

Powder XRD patterns of SiNW/Gt were recorded as per the above methodology. XRD of SiNW/Gt confirmed the presence of elemental C, Si and Sn (Figure 3). The major peak at 26.2 ° is assigned to Gt along with peaks at 44.3 ° and 54.1 °. Three distinct peaks at 28.7 °, 47.7 ° and 56.5 ° represent Si with peaks at 30.6 °, 32.0 °, 45.0 ° and 55.3 ° corresponding to Sn.

Within a two hour reaction using 3 mL of PS, composite yields of equal to or greater than 30% were achieved. Note, as the Sn content of precursor mix was increased (from SiNW/Gt_1 to SiNW/Gt_5) there was a proportional increase in the Sn content of the final composite.

**Thermogravimetric analysis (TGA) and quantitative scanning electron microscopy energy-dispersive X-ray spectroscopy (SEMI-EDX) to analyse chemical composition of SiNW/Gt composites.**

### METHODOLOGY

Thermogravimetric analysis (TGA), in conjunction with quantitative scanning electron microscopy energy-dispersive X-ray spectroscopy (SEM-EDX), was used to approximate the chemical composition of the 5 different SiNW/Gt composites.

TGA was performed on the PerkinElmer TGA 4000. Samples were heated under air between 30-950°C at ramp rates of 40°C min⁻¹ from 30-350°C, and 10°C min⁻¹ from 350-950°C. TGA determined the Gt content of each composite through carbon mass loss. The residual carbon-free content was subsequently assigned to Si and Sn. Quantitative EDX of SiNW/Gt on the Hitachi SU-70 estimated the elemental weight ratio of Si and Sn, allowing for each constituent element (C, Si and Sn) to be approximately quantified for the five different SiNW/Gt formulations as well as SiNW.

### RESULTS

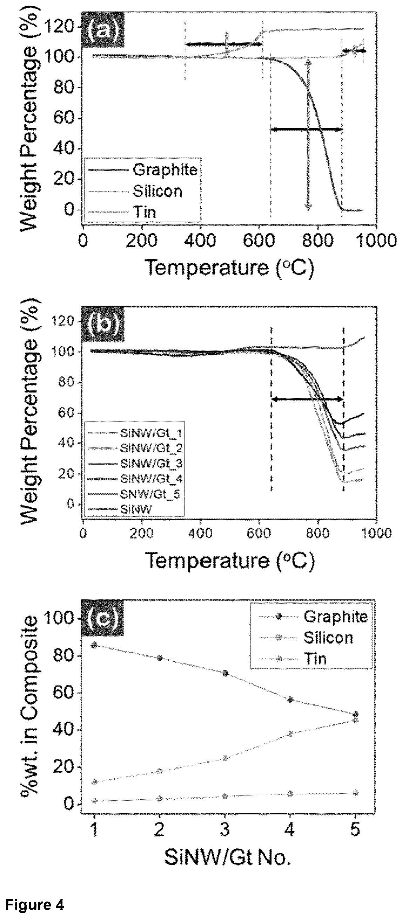

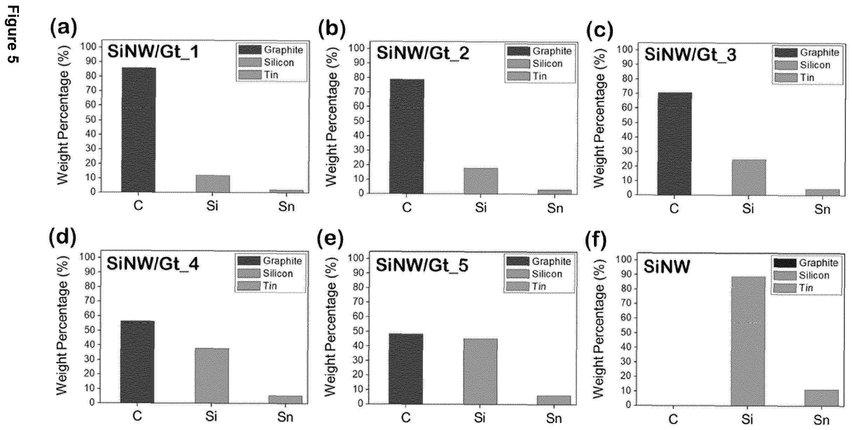

The results are illustrated in Figure 4 and Figure 5.

Background TGA scans of pure SiNWs (orange), SnNPs (green) and Gt (purple) revealed the ranges over which mass loss/gain occurs for each component of SiNW/Gt (Figure 4a). TGA was carried out on each SiNW/Gt composition and mass loss between the 635-880°C was assigned to Gt (Figure 4b).

SiNW/Gt_1, SiNW/Gt_2, SiNW/Gt_3, SiNW/Gt_4 and SiNW/Gt_5 were comprised of 85.9, 78.9, 70.7, 56.5 and 48.5 wt% Gt (Figure 4c). From quantitative EDX of each sample, the respective Si contents were determined to be 12.1, 18.0, 24.9, 37.9 and 45.2 % (Figure 5). The Sn composition of each composite was found to increase proportionally with the Si content, with respective values of 2.0, 3.1, 4.4, 5.6 and 6.3 %. Additionally, SEM-EDX of SiNW determined the composition to be 89 wt% Si and 11 wt% Sn.

### Li-ion battery anodes

### METHODOLOGY

The composite powders produced in the above method were slurry processed for use as Li-ion battery anodes. Solutions of 1.5 wt% CMC in H₂O and 3 wt% styrene butadiene rubber (SBR) in H₂O were formulated and used as suitable binders. Super P carbon black (CB) was used as the conductive component. The specific makeup of each slurry was tuned to optimise adhesion of the active layer to the underlying Cu foil. Increasing the Si content of the SiNW/Gt composites required greater binder and additive additions to formulate a smooth and uniform slurry coating.

Slurry configurations for each composite are given in Table 3.

Firstly, appropriate amounts of CMC and SBR solutions were used to homogeneously disperse CB. The mix was left stir for 6 h, followed by slow incremental addition of the SiNW/Gt powder with constant stirring. The slurry was left to stir for 24 h prior to casting. Slurries were cast on Cu foil (9 µm, Pi-Kem) on a heated doctor blade apparatus. The casting height of the doctor blade was increased incrementally from 20-60 µm across each casting foil, giving a good distribution of anode loadings between 0.5-3.5 mg cm⁻². Anode tapes were desiccated in a vacuum oven overnight @ 120 °C. Afterwards, circular anodes (0.64 cm²) were punched out and stored under Ar prior to cell assembly.

Li||SiNW/Gt half cells (HCs) were assembled using CR2032 coin cells in an Ar-filled glovebox. Circular lithium pellets (1.76 cm², purchased from MTI Corporation) were used as the HC counter electrode. Specific capacity values for each SiNW/Gt formulation were determined from constant current (100 mA g⁻¹) ageing vs Li metal. Electrodes were separated from each other using a porous polypropylene Celgard separator paper. A 1 M LiPF₆ in EC-DEC (1:1 v/v) + 3 wt% VC electrolyte (purchased from Sigma Aldrich) was chosen as the std. electrolyte configuration and used throughout. The electrochemical performances of Li||SiNW/Gt HCs were analysed through galvanostatic cycling using a BioLogic BCS-805 multichannel potentiostat. HC testing was carried out within a 0.01-1.0 V vs Li/Li⁺ potential window.

The electrochemical performances of each SiNW/Gt configuration was tested in HCs vs Li metal to analyse the effect of Si composition on the overall performance of the SiNW/Gt composite anode. Cells were cycled at 100 mA g⁻¹ between 0.01-1.0 V vs Li/Li⁺. Li||Gt HCs were used as a suitable baseline for analysis (light blue).

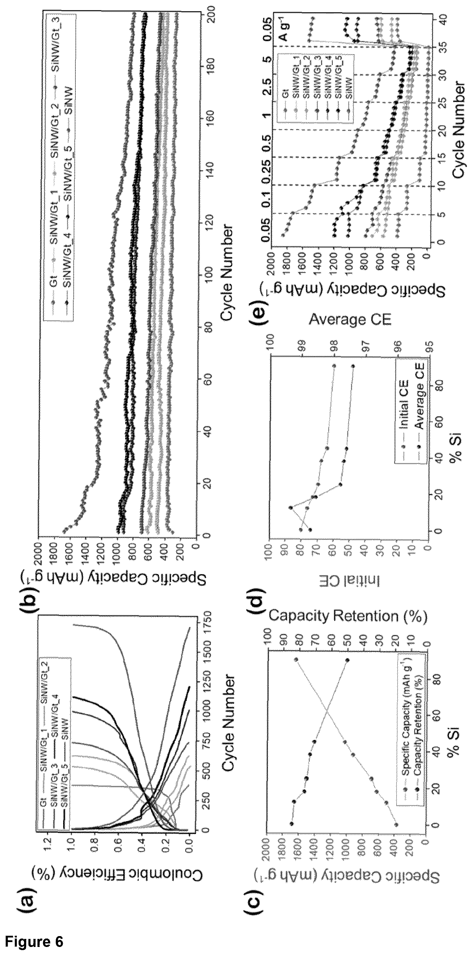

Additionally, SiNW (red) was employed as the upper capacity threshold, to analyse the impact of Gt addition on cell performance. Several distinct trends in electrochemical performance were noted as the Si content was increased from SiNW/Gt_1 (12 wt%) to SiNW/Gt_5 (45 wt%). Galvanostatic charge-discharge (GCD) profiles evolved with increasing Si content (Figure 6a).

The lithiation behaviour of pure Gt (light blue) is governed by three narrow capacity plateaus at 0.20, 0.11 and 0.07 V vs Li/Li⁺.Analogously, three plateaus in the anodic scan at 0.11, 0.15 and 0.23 V vs Li/Li⁺ signify the multi-step Li⁺ deintercalation process. On the other hand, Si (de)lithiation (red) is governed by a two-step process, distinguished by broader capacity plateaus. In the cathodic scan, plateaus at 0.29-0.16 V and 0.16-0.01 V correspond to Si → LiₓSi and LiₓSi → Li₁₅Si₄, respectively. Wide plateaus in the anodic scan at 0.22-0.35 V and 0.39-0.52 V correspond to Li₁₅Si₄ → LiₓSi and LiₓSi → Si phase transitions, respectively.

### RESULTS

The electrochemical performances of each SiNW/Gt configuration was tested in HCs vs Li metal to analyse the effect of Si composition on the overall performance of the SiNW/Gt composite anode (Figure 6).

Increasing the Si content was shown to incrementally increase Si redox activity, gradually shifting capacity behaviour from Gt to Si, with Si redox plateaus becoming better defined for higher Si contents.

Discharge capacity ageing of each sample tracked the effect of Si on both capacity and stability of SiNW/Gt (results shown in Figure 6b). Gt (light blue) delivered 371 mAh g⁻¹, with 86.1 % capacity retention after 200 cycles. Specific capacity of SiNW/Gt increased with Si content, with SiNW/Gt_1 (orange), SiNW/Gt_2 (green), SiNW/Gt_3 (purple), SiNW/Gt_4 (blue) and SiNW/Gt_5 (black) reaching max. capacities of 501, 623, 692, 941 and 1028 mAh g⁻¹.

Conversely, capacity retention fell with increasing Si content, with respective values of 84.6, 76.5, 75.2, 74.9, and 69.9 % after 200 cycles (results shown in Figure 6c). The stabilising effect of Gt was observable here, with SiNW (red) retaining only 50.4 % capacity after 200 cycles. Increasing the Si content was found to increase the specific capacity at the cost of an accelerated capacity fade. Pure Gt delivered an initial coulombic efficiency (CE) of 80.1 %. Increasing the Si content gradually lowered the initial CE, with respective values of 76.2, 72.9, 69.7, 67.8, 64.2 and 60.2 % (results shown in Figure 6d). Higher Si contents lead to a greater consumption of Li during solid electrolyte interphase (SEI) formation, leading to a reduced initial CE.

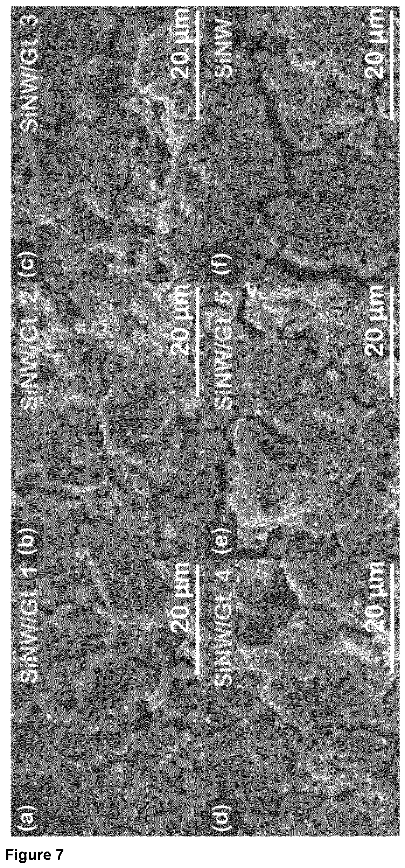

SiNW/Gt_1 delivered the highest overall average CE of 99.3 %, compared to 98.7 % for pure Gt, although average CE remained above 97 % for each SiNW/Gt sample. SiNW incorporation in Gt was found to notably improve rate performance. Gt returned a negligible capacity of 3 mAh g⁻¹ at 5 A g⁻¹, compared to 196 mAh g¹ for SiNW/Gt_1 (results shown in Figure 6e). However, Gt recovered 100 % capacity after rate testing, indicating that such high-rate capacity losses are reversible. Notably, SiNW exhibited poor reversibility after rate testing, recovering only 83.0 % at 50 mA g⁻¹. SEM analysis of the post-cycled SiNW/Gt morphology revealed the formation of a mesh-like Si top layer, after 200 cycles (results shown in Figure 7). Increasing the Si content of SiNW/Gt was found to increase the coverage of Gt by this Si mesh layer.

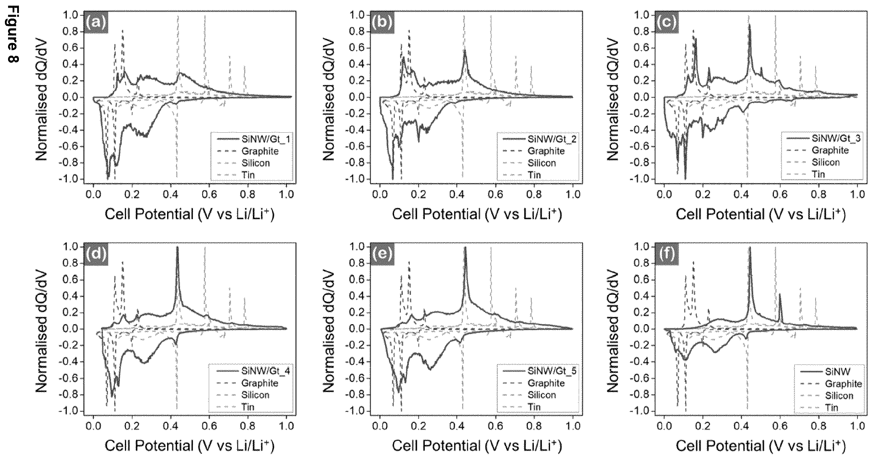

Differential capacity plots (DCPs) tracked the evolution of the redox behaviour of SiNW/Gt as the Si content was increased (results shown in Figure 8a-e). Background DCPs of Li||Gt (purple), Li||SiNW (orange) and Li||Sn (green) were used to identify characteristic redox peak locations for each active component (C, Si, Sn) within SiNW/Gt. As the Si content was increased from 12 wt% (SiNW/Gt_1) to 45 wt% (SiNW/Gt_5) low-voltage peaks associated with Gt (de)lithiation exhibited a reduction in iintensity coupled with an increase in Si redox peak intensity. The sharp Gt peaks in the anodic scan are gradually replaced by a single broad peak associated with Si delithiation. Additionally, a sharp peak at 0.44 V evolves as Si content is increased, associated with LiₓSi → Si transition. Also, it should be noted that the capacity contribution from Sn redox increases from SiNW/Gt_1 to SiNW/Gt_5, indicated by the evolution of minor charge and discharge peaks at 0.43 V and 0.58 V, respectively. For comparison, the sharp triplet of peaks associated with Gt (de)lithiation are not present for Gt-free SiNW (Figure 8f).

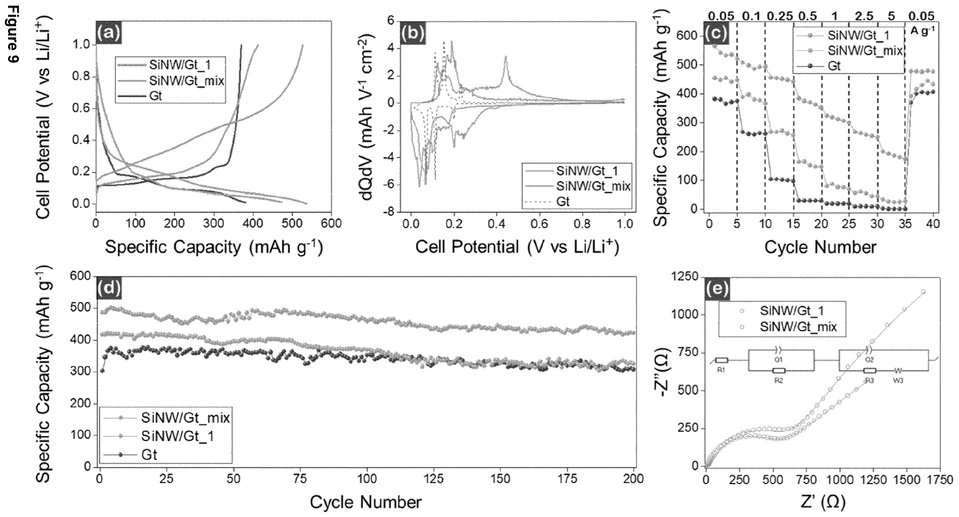

The electrochemical performance of SiNW/Gt was found to be significantly enhanced by the direct contacting of the Si NW layer to the Gt surface. SiNW/Gt_1 was compared to SiNW/Gt_mix in terms of specific capacity, capacity retention, redox behaviour, rate performance and cell impedance (results shown in Figure 9). SiNW/Gt_mix anodes were fabricated to mimic the elemental composition of SiNW/Gt_1 (14 wt% Si + Sn, 86 wt% Gt). SiNW/Gt_mix returned a lower specific capacity of 421 mAh g⁻¹, compared to 505 mAh g⁻¹ for SiNW/Gt_1 (Figure 9a). SiNW/Gt_mix capacity is largely assigned to Gt (76 %) with a minor contribution from Si (24 %). SiNW/Gt_1 appears to access the Si component more easily, increasing capacity over SiNW/Gt_mix by 20 %. DCP profiles reflect this behaviour, with SiNW/Gt_mix showing poor activation of the Si component (Figure 9b). Differences in cell performance were further heightened at high current rates, with SiNW/Gt_mix approaching the behaviour of pure Gt (Figure 9c). At low current densities (50 mA g⁻¹), SiNW/Gt_1 returned a specific capacity 1.25× that of SiNW/Gt_mix, rising to 5.5× at 5 A g⁻¹. Discharge capacity profiles of SiNW/Gt_1 (green) and SiNW/Gt_mix (orange) showed that SiNW/Gt_1 not only delivered a higher specific capacity, but also demonstrated an improved capacity retention of 82.8 %, compared to 77.9 % for SiNW/Gt_mix (Figure 9d). Nyquist plots of SiNW/Gt_1 (green) and SiNW/Gt_mix (orange) taken after 25 cycles found that the diminished rate performance of SiNW/Gt_mix over SiNW/Gt_1 coincides with a higher R_{CT} (Figure 9e). SiNW/Gt_mix exhibited a R_{CT} of 383 Ω, compared to 279 Ω for SiNW/Gt_1.

### Equivalents

The foregoing description details presently preferred embodiments of the present invention. Numerous modifications and variations in practice thereof are expected to occur to those skilled in the art upon consideration of these descriptions. Those modifications and variations are intended to be encompassed within the claims appended hereto.

## Claims

1. A method for synthesizing a silicon (Si) and/ or germanium (Ge) nanowire carbon composite in a solution-based approach, the method comprising the steps of:
combining (i) a mixture of a lithium alloying metal and a carbon particle, (ii) an Si and/or Ge precursor and (iii) a refluxing solvent under reflux conditions and reacting to form the composites.

2. The method of Claim 1, wherein the Si precursor comprises silane.

3. The method of Claim 2, wherein the Si precursor is selected from the group comprising phenylsilane, diphenylsilane, silane, tetraphenylsilane, halosilanes including chlorosilane, trimethylsilane, tetramethylsilane, hexachlorodisilane and silicon iodide.

4. The method of Claim 1, wherein the precursor is a Ge precursor and the Ge precursor may be selected from the group comprising phenylgermane, diphenylgermane, triphenylgermane and GeX4, ( X= Cl, Br, H, I).

5. The method of any one of the preceding claims, wherein the carbon particle is selected from the group comprising carbon nanofibers (CNF), carbon nanotube (CNT), carbon microparticles, graphene, and graphite.

6. The method of Claim 5, wherein the carbon particle is graphite.

7. The method of any one of the preceding claims, wherein the refluxing solvent is a high boiling point solvent that has been heated to a reaction temperature greater or equal to 380°C to produce a refluxing solvent.

8. The method of Claim 7, wherein the reflux conditions comprise providing a reaction temperature of from 380°C to 470°C.

9. The method of Claim 7 or 8, wherein the high boiling point solvent is selected from squalane, octadecene and ethylene glycol.

10. The method of any one of the preceding claims, wherein the lithium alloying metal is Sn.

11. The method of any oneof the preceding claims, wherein the mixture of lithium alloying metal and carbon particle is a homogenous mixture.

12. The method of any one of the preceding claims, wherein the lithium alloying metal and carbon particle are powders.

13. A composite produced or obtained from the method of the current invention.

14. A Si and/or Ge nanowire/carbon composite comprising a carbon particle having nanowires on the surface, wherein the nanowires form a porous shell around the particle.

15. A battery comprising the composite of Claim 13 or 14.
